Europäisches Patentamt

European Patent Office

Office européen des brevets

(11) Numéro de publication: **0 228 319**
**A1**

## (12) DEMANDE DE BREVET EUROPEEN

(21) Numéro de dépôt: **86402531.7**

(51) Int. Cl.⁴: **A 23 D 5/00, A 23 L 1/04**

(22) Date de dépôt: **14.11.86**

(30) Priorité: **15.11.85 FR 8516952**

(71) Demandeur: **GEL'DOR Société anonyme, Domaine des Terriers Chemin Lebon, F-06600 Antibes (FR)**

(43) Date de publication de la demande: **08.07.87 Bulletin 87/28**

(72) Inventeur: **Constantin, Gérard, Route de Plascassier Les Hauts de Sartoux, F-06370 Mouans Sartoux (FR)**
Inventeur: **Constantin, Rémi, Les Soucaous Chemin des Bations, F-06370 Mouans Sartoux (FR)**

(84) Etats contractants désignés: **AT BE CH DE ES FR GB GR IT LI LU NL SE**

(74) Mandataire: **Gillard, Marie-Louise et al, Cabinet Beau de Loménie 55, Rue d'Amsterdam, F-75008 Paris (FR)**

(54) Composition alimentaire pulvérulente à base de matière grasse et de gélifiants, produits d'enrobage et succédanés de la barde résultant de la cuisson des émulsions aqueuses la contenant.

(57) La présente invention concerne une composition pulvérulente à base de matière grasse et de gélifiants, apte à former une émulsion dans l'eau, laquelle après cuisson et refroidissement se fige en un produit ayant une texture analogue à celle de la barde de porc. Cette composition est constituée d'un mélange d'au moins une matière grasse et d'au moins trois gélifiants choisis parmi les carraghénanes, la gomme xanthane et la farine de graines de caroube. Application: succédanés de la barde et enrobage des produits alimentaires.

EP 0 228 319 A1

Composition alimentaire pulvérulente à base de matière grasse et de gélifiants, produits d'enrobage et succédanés de la barde résultant de la cuisson des émulsions aqueuses la contenant.

La présente invention concerne une composition alimentaire pulvérulente à base de matière grasse et de gélifiants. Elle a également pour objet les produits d'enrobage et les succédanés de la barde résultant de la cuisson des émulsions aqueuses la contenant.

La présente invention trouve ses applications dans l'industrie alimentaire, particulièrement dans les activités ayant pour objet la préparation de produits de charcuterie, de produits de poissonnerie et de produits de boucherie. Outre la préparation de ces produits, l'invention concerne également la préparation de tout produit alimentaire pouvant bénéficier d'un enrobage gras ou d'un enveloppage à l'aide d'une barde.

Traditionnellement, il est d'usage d'entourer d'une pièce de gras les produits de charcuterie (tels que par exemple : les pâtés de foie ou les ballottines) ou de boucherie, tels que les différents types de rôti, afin notamment d'en faciliter la cuisson, d'en améliorer le goût et la présentation. Cette pièce appelée "barde" est directement issue d'une découpe en couches, généralement fines, du gras de bardière du porc ; il s'agit en fait d'une matière première directement prélevée sur l'animal abattu.

L'utilisation de cette barde se pratique depuis fort longtemps, mais présente cependant de nombreux inconvénients. Le premier d'entre eux est un apport, parfois important, dans la ration alimentaire de lipides riches en cholestérol, molécule dont le rôle est bien connu dans la formation de plaques d'athéromes pouvant elles-mêmes conduire à des accidents thrombotiques ou emboliques. Cette remarque vaut que la barde soit consommée telle quelle, comme par exemple dans le cas d'un pâté de foie ou qu'elle soit éliminée après cuisson au cours de laquelle certains de ses constituants ont pénétré dans l'aliment ou se retrouvent dans le jus de cuisson, comme par exemple dans le cas d'un rôti.

De plus l'approvisionnement en bardes de porc est devenu difficile en raison des objectifs recherchés par l'élevage porcin tendant à l'obtention d'animaux peu gras de façon à disposer d'une viande maigre.

On peut enfin remarquer que l'emploi de pareille barde de porc est impossible dans les parties du monde où, pour des raisons éthiques ou confessionnelles, la consommation de viande de porc ou l'utilisation alimentaire de morceaux de porc est interdite.

Il convient de noter également que les déchets résultant de la préparation de la barde ou de son utilisation, notamment lorsqu'elle est découpée en bandes fines ou en panneaux, ne sont pas réutilisables si ce n'est en l'état ; il n'est en effet pas possible d'en obtenir la fusion et une nouvelle mise en forme.

Il faut encore souligner que la barde de porc constitue un produit susceptible de s'altérer rapidement sous l'action de différents micro-organismes et que l'on ne peut que tenter d'éviter une telle altération par une utilisation rapide en raison de l'impossibilité de lui faire subir, entre son prélèvement et son utilisation, un traitement thermique.

Un succédané de la barde de porc, se présentant également sous forme de bandes, a déjà été mis au point. Ce produit, préparé à partir de couenne de porc émulsionnée en présence d'alginates présente, après addition d'une solution de $CaSO_4$ destinée à rendre l'émulsion irréversible, plusieurs inconvénients. Il est granuleux (alors qu'une surface régulière favorise une bonne présentation des produits), cassant (sa manipulation est donc malaisée) et adhère mal à la pièce de viande ou du produit de charcuterie ; il est également difficilement assimilable lors de sa consommation ; enfin en raison d'une émulsion couchée à froid, les déchets de fabrication ne sont pas réutilisables.

La présente invention permet précisément de pallier les inconvénients des produits de l'art antérieur et fait bénéficier les industriels de possibilités et de performances d'utilisation nouvelles.

On a en effet trouvé que l'on peut barder ou enrober des produits de charcuterie ou des pièces de boucherie en utilisant une composition alimentaire pulvérulente à base de matière grasse et d'au moins trois gélifiants choisis parmi les carraghénanes, la gomme xanthane, la farine de graines de caroube, ladite composition contenant éventuellement de la gélatine.

Selon l'invention, les produits alimentaires sont :

- soit enrobés par trempage dans, ou par pulvérisation avec, un produit d'enrobage résultant de la cuisson d'une émulsion aqueuse de la composition alimentaire pulvérulente ci-dessus, ladite composition contenant de la gélatine ;

- soit bardés par utilisation d'un succédané de la barde obtenu par couchage à chaud d'une émulsion aqueuse cuite de la composition alimentaire pulvérulente ci-dessus.

Ainsi la présente invention a pour objet une composition alimentaire pulvérulente destinée à la préparation d'un produit d'enrobage et d'un succédané de la barde. Cette composition est constituée d'un mélange contenant de la matière grasse et au moins trois gélifiants choisis parmi les carraghénanes, la gomme xanthane et la farine de graines de caroube.

Elle concerne également les produits d'enrobage obtenus par cuisson des émulsions aqueuses contenant la composition alimentaire pulvérulente ci-dessus, ladite composition contenant en outre de la gélatine.

Elle a aussi pour objet les succédanés de la barde obtenus par couchage à chaud des émulsions aqueuses cuites de ladite composition alimentaire pulvérulente.

La matière grasse peut être de nature animale ou végétale selon les disponibilités du marché et la nature du produit à enrober ou à barder. L'utilisation d'une matière grasse végétale est avantageuse sur le plan nutritionnel en raison d'une teneur peu élevée en cholestérol, la matière grasse végétale peut provenir des plantes qui, tels le coprah, le soja, le colza et le tournesol, sont habituellement cultivées en vue de sa production.

Parmi les matières grasses animales, le suif et la matière grasse laitière peuvent être notamment utilisés. Le choix

4

d'une matière grasse issue d'un animal autre que le porc permet avantageusement de préparer des viandes casher.

La composition pulvérulente selon l'invention peut contenir de la matière grasse d'origine végétale, de la matière grasse d'origine animale ou leurs mélanges.

Les proportions relatives des gélifiants peuvent varier dans une large mesure. Toutefois il faut noter que les gélifiants et leurs proportions doivent être choisis de manière à ce que :

- par mélange avec une matière grasse donnée on obtienne un produit pulvérulent ;

- ledit produit pulvérulent forme dans l'eau une émulsion qui, après cuisson et refroidissement, se fige en un produit (enrobage ou barde) ayant une texture analogue à celle de la barde de porc.

De plus il importe que le succédané de la barde selon l'invention présente une température de fusion nettement supérieure à la température généralement utilisée dans les fours de cuisson.

On notera que les compositions pulvérulentes selon l'invention peuvent contenir de la gélatine. De telles compositions conviennent pour fabriquer des émulsions destinées à l'enrobage de produits de charcuterie déjà cuits.

L'émulsion est de préférence formée dans de l'eau à ébullition. La cuisson est avantageusement réalisée à une température supérieure ou égale à 95°C. Après cuisson l'émulsion est de préférence refroidie jusqu'à une température d'environ 40°C lorsque la composition pulvérulente contient de la gélatine ou jusqu'à une température d'environ 80°C lorsque la composition pulvérulente est sans gélatine.

En plus de la matière grasse et des gélifiants précités peuvent être éventuellement ajoutés dans la composition pulvérulente de l'invention :

- un autre gélifiant qui, tel que la gomme de guar (E 412), associe les fonctions du carraghénane et de la farine de graines de caroube et favorise la liaison des constituants,

- un sel, tel que le chlorure de sodium qui permet de moduler d'une façon équilibrée l'action des gélifiants,

- un ou plusieurs colorants et/ou arômes de qualité alimentaire ;

- des protéines et/ou des glucides qui améliorent les qualités nutritives de la composition. Ces composés peuvent être introduits, lors de la préparation de la composition, en même temps que la matière grasse, sous forme d'un concentré.

Les compositions pulvérulentes selon l'invention peuvent aussi contenir des maltodextrines et de l'amidon.

Il appartiendra à l'homme de l'art de déterminer, par des essais de routine, les proportions relatives des constituants de la composition selon l'invention.

Parmi les compositions selon l'invention dépourvues de gélatine, celles qui sont particulièrement préférées contiennent avantageusement, en pourcentage en poids par rapport au poids de la composition, environ 70 à 85 % de matière grasse végétale, 10 à 15 % de carraghénane, 4,9 à 14,5 % de farine de graines de caroube et 0,1 à 0,5 % de gomme xanthane.

Les compositions alimentaires préférées aux fins de l'invention et contenant de la gélatine contiennent avantageusement, en pourcentage en poids par rapport au poids total, environ 20 à 69 % de matière grasse végétale, 30 à 75 % de gélatine, 0,4 à 3 % de carraghénane, 0,5 à 1,5 % de farine de graines de caroube et 0,1 à 0,5 % de gomme xanthane.

Ces deux types de composition peuvent contenir en outre, par rapport à leur poids final, 1 à 15 % de glucides, 1 à 5 % de protéines, 0,1 à 1 % de gomme de guar et 1 à 3 % d'un sel alimentaire.

A titre d'exemples, on donnera ci-après deux compositions spécifiques selon l'invention dans lesquelles la matière grasse est apportée sous la forme d'un concentré A contenant, pour 100 g de son poids, 77,1 g de lipides, 15,8 g de glucides, 5,3 g de protéines, 1,5 g d'eau et 0,3 g de cendres.

Composition A

- concentré A        77 %
- mélange de gélifiants        21 %

|       | | |
|-------|-------|-------|
| soit  | - carraghénane | 12,2 % |
|       | - farine de graines de caroube | 8,0 % |
|       | - gomme xanthane | 0,2 % |
|       | - gomme de guar | 0,6 % |

- sel (chlorure de sodium)                          2,0 %

composition B

- concentré A                                        50  %

- gélatine catégorie G, 200 Bloom, chaulée          45  %

- mélange de gélifiants                               3  %

|       | | |
|-------|-------|-------|
| soit  | - carraghénane | 1,4 % |
|       | - farine de graines de caroube | 1,0 % |
|       | - gomme xanthane | 0,15 % |
|       | - gomme de guar | 0,45 % |

- sel (chlorure de sodium)                          2,0 %

Les compositions pulvérulentes selon l'invention peuvent être conservées pendant environ 3 mois au sec et à l'abri de la lumière.

La composition alimentaire pulvérulente est obtenue par mélange des différents constituants. On peut avantageusement utiliser le mode opératoire qui comprend les étapes ci-après :

1) mélange des différents gélifiants pour former un premier prémélange ;

2) mélange des éventuels colorants et arômes avec le sel qui les fixe ; un second prémélange est obtenu.

3) mélange de la moitié de la matière grasse avec les prémélanges obtenus selon 1 et 2.

4) mélange du reste de la matière grasse avec le mélange obtenu selon 3.

Ce procédé implique la mise en oeuvre d'un mélangeur approprié, équipé de façon que le taux d'humidité soit contrôlé et que le produit soit maintenu à une température constante, de préférence à la température ambiante des locaux de fabrication. Le contrôle de la température se justifie par la nécessité de ne pas chauffer la matière grasse.

Il est à noter que, lorsque la composition pulvérulente contient de la gélatine, celle-ci est ajoutée de préférence au mélange obtenu à l'étape 4. La gélatine utilisée est de préférence de catégorie G, chaulée et présente un Bloom de 100 à 300.

La composition alimentaire pulvérulente (ci-après désignée par le terme poudre), qui peut constituer en tant que telle un produit industriel offert à la vente, doit être transformée en émulsion dans l'eau pour donner après cuisson et refroidissement un produit fini (produit d'enrobage ou succédané de la barde). On utilise avantageusement 15 à 30g de la composition pulvérulente pour 100ml d'eau.

L'obtention dudit produit fini requiert deux étapes principales : la réhydratation de la poudre et la cuisson de la poudre réhydratée. On utilise avantageusement une cuve de cuisson en acier inoxydable de qualité alimentaire (l'utilisation d'un matériel en aluminium est à éviter car la matière grasse deviendrait grise à son contact), munie d'une double enveloppe à circulation de liquide pour le chauffage de la cuve et équipée d'un système d'agitation et d'un désaérateur ou d'une installation permettant la mise sous vide de la cuve.

De préférence on introduit tout d'abord la quantité d'eau nécessaire que l'on maintient avantageusement à l'ébullition ; cette température permet d'une part un traitement thermique à effet pasteurisant et d'autre part un mélange rapide. La poudre est alors versée en pluie avec une agitation rapide.

L'émulsion ainsi obtenue est soumise pendant 5 à 30 min à une cuisson à une température généralement supérieure à 95°C car les gélifiants les plus couramment utilisés ne sont solubles qu'à une telle température.

Le produit résultant de la cuisson de l'émulsion peut être utilisé pour l'enrobage d'un produit alimentaire par trempage dudit produit alimentaire ou par pulvérisation sur les contours dudit produit alimentaire.

Cette première utilisation ne concerne que les produits résultant de la cuisson d'une émulsion préparée à partir d'une poudre contenant de la gélatine. L'émulsion cuite doit être refroidie jusqu'à environ 40°C. De préférence, elle est à cet effet transférée dans une cuve permettant son maintien à une température moyenne de 40°C.

Le produit résultant de la cuisson de l'émulsion peut également servir à la préparation de succédanés de la barde désignés aussi ci-après par le terme de bardes. L'émulsion cuite doit alors être refroidie jusqu'à environ 85°C ; dans une réalisation préférée elle est retransférée de la cuve de cuisson dans une cuve-tampon munie d'une double enveloppe et d'un agitateur permettant une agitation lente pour ne pas la réaérer.

Par l'intermédiaire d'une pompe, on envoie l'émulsion cuite, lorsqu'elle est bien stabilisée à 85°C, dans un bac de débordement situé au-dessus d'un tapis roulant. Le réglage du débit de la pompe et celui de la vitesse d'avancement du tapis déterminent l'épaisseur de la barde obtenue.

Le bac (de préférence en inox de qualité alimentaire) comporte de préférence une double enveloppe de façon à permettre le maintien de l'émulsion à 80°C, température qui est, pour les produits concernés le point de rupture de la gélification, de façon que le produit tombant sur le tapis se fige immédiatement. Bien entendu la largeur du bac conditionne la largeur de la bande.

Le tapis doit être, pour obtenir une barde d'épaisseur uniforme, en une matière lui assurant une résistance aux contraintes résultant des variations de températures de façon qu'il soit toujours plat. De préférence, il est en inox de qualité alimentaire. Sa longueur est choisie en tenant compte de la température du local de fabrication à son niveau et du temps de gélification de la barde, en s'attachant à obtenir dans le délai le plus bref une bande suffisamment solidifiée pour éventuellement permettre son transfert sur un dispositif tel qu'un tapis grillagé, capable d'assurer un séchage de la barde sur ses deux faces. Ce dispositif est de préférence en inox de qualité alimentaire. Sa longueur est également choisie de façon que la barde soit, arrivée à son extrémité, correctement séchée. Bien entendu, le ou les tapis peuvent être avantageusement placés dans une enceinte dans laquelle on fait entrer un air séché, filtré et présentant une température comprise entre 25 et 35°C.

La barde obtenue est ensuite transférée sur un tapis de découpe de façon à être découpée en bandes présentant les dimensions requises par les utilisateurs. Cette découpe peut être manuelle ou automatisée. Les chutes issues de cette découpe peuvent être réutilisées en les découpant en de petits grains qui sont ensuite versés dans la cuve de cuisson.

Les bandes de bardes étant susceptibles d'exsuder de l'eau, elles sont avantageusement conditionnées par paquets en intercalant entre les bandes des feuilles de papier buvard alimentaire. Ces paquets peuvent être conditionnés sous vide, ce qui permet leur conservation à plus 10 °C pendant au moins un mois.

Les bandes de barde ainsi obtenues présentent une texture leur assurant une grande souplesse, elles peuvent donc être manipulées sans risque de rupture et s'adapter facilement sur des produits aux formes irrégulières. Elles ont de plus la propriété d'adhérer aux moules ou aux produits.

Il est également possible pour l'obtention d'un succédané de la barde d'envoyer le produit résultant de la cuisson de l'émulsion stabilisé à 85 °C vers un bac où il se prend en masse, est refroidi puis tranché mécaniquement en bandes.

Les produits d'enrobage obtenus à partir d'une émulsion préparée à partir d'une poudre contenant de la gélatine conviennent pour l'enrobage de produits déjà cuits. Ceux obtenus à partir d'une émulsion préparée à partir d'une poudre ne contenant pas de gélatine sont appropriées pour barder des produits déjà cuits ou des produits devant être cuits ultérieurement.

L'invention va être maintenant illustrée par les exemples ci-après qui ne limitent en rien sa portée. Dans ces exemples, les pourcentages indiqués sont donnés en poids du composant concerné par rapport au poids total de la composition. Les gélifiants sont désignés par leurs dénominations couramment utilisées et définies dans les textes réglementant les produits alimentaires. Par concentré A, on entend le concentré commercialisé par la Société Foods Ingredients Specialities SA (Suisse) sous la marque VEEKREN K®. Ce concentré contient, pour 100 g de son poids, 77,1 g de lipides, 15,8 g de glucides, 5,3 g de protéines, 1,5 g d'eau et 0,3 g de cendres ; son point de fusion est de 40° C.

EXEMPLE 1 : préparation d'un produit d'enrobage.

1.1 Préparation de la poudre.

Elle est effectuée à la température ambiante des locaux de fabrication.

a) Prémélange des gélifiants.

On effectue le mélange ci-après:

| E 407 (carraghénane) | 1,4 % |
| E 4I0 (farine de graines de caroube) | 1,0 % |
| E 4I2 (gomme de guar) | 0,45 % |
| E 4I5 (gomme xanthane) | 0,15 % |

b) Prémélange des arômes et des colorants.

On mélange 2 % de chlorure de sodium avec du rocou et un arôme de porc.

c) mélange des prémélanges obtenus en a et b avec une partie de la matière grasse devant être utilisée, à savoir 25 % de concentré A.

Le produit obtenu est correctement homogénéisé.

d) Mélange du produit obtenu en c) avec le reste de la matière grasse, à savoir 25 % de concentré A.

Le produit obtenu est correctement homogénéisé.

e) Addition de gélatine.

Au mélange obtenu en d) sont ajoutés:

45 % de gélatine de catégorie G, 200 Bloom, chaulée en poudre.

Le mélange obtenu est homogénéisé, il se présente sous la forme d'un produit pulvérulent utilisé tel quel pour la préparation de l'émulsion. Cette poudre présente une granulométrie comprise entre 40 et 60 microns et possède un pourcentage d'humidité d'environ 12%.

## 1.2 Préparation de l'émulsion

Dans une cuve de cuisson sont versés 100 l d'eau portée et maintenue à 100°C.

27,5 kg de la poudre obtenue en 1.1 sont versés en pluie alors que l'eau est soumise à une agitation rapide.

Il se forme une émulsion.

## 1.3 Cuisson de l'émulsion

L'émulsion est soumise à 95°C pendant 10 minutes et désaérée tout au long de la cuisson.

## 1.4 Refroidissement du produit résultant de la cuisson de l'émulsion

Le produit obtenu en 1.3 est transféré dans une cuve-tampon où il est maintenu à 40°C. Il est alors prêt à être utilisé pour l'enrobage (ou la décoration) de produits alimentaires ne nécessitant pas une cuisson ultérieure tels que notamment certaines charcuteries cuites (ballottine, hure pressée, langue en gelée ou pâté de foie).

EXEMPLE 2 : Préparation d'un succédané de la barde (barde en bandes)

## 2.1. Préparation de la poudre.

Elle est effectuée à la température ambiante des locaux de fabrication.

a) Prémélange des gélifiants.

On mélange les gélifiants ci-après :

| | |
|---|---|
| E 407 (carraghénane) | 12,2% |
| E 410 (farine de graines de caroube) | 8% |
| E 412 (gomme de guar) | 0,6% |
| E 415 (gomme xanthane) | 0,2% |

b) Prémélange des arômes et des colorants.

On mélange le chlorure de sodium (2 %) avec du rocou et un arôme de porc.

c) Mélange des prémélanges obtenus en a et b, avec une partie de la matière grasse, à savoir 38,5 % de concentré A.

Le produit obtenu est correctement homogénéisé.

d) Mélange des produits obtenus en c) avec le reste de la matière grasse, soit 38,5 % de concentré A.

Le produit obtenu est correctement homogénéisé : il se présente sous la forme d'une poudre.

## 2.2. Préparation de l'émulsion

Dans une cuve de cuisson sont versés 100 l d'eau portée et maintenue à 100 °C.

22 kg de la poudre obtenue en 2.1 sont versés en pluie alors que l'eau est soumise à une agitation rapide.

Il se forme une émulsion.

## 2.3 Cuisson de l'émulsion

L'émulsion est soumise à 95°C pendant 10 minutes et désaérée tout au long de la cuisson.

## 2.4 Refroidissement du produit résultant de la cuisson de l'émulsion

Le produit obtenu en 2.3 est transféré dans une cuve-tampon où il est maintenu à 85°C.

## 2.5 Préparation de la barde

Par l'intermédiaire d'une pompe, on envoie le produit obtenu en 2.4 dans un bac de débordement situé au-dessus d'un tapis roulant.

Le bac permet de maintenir l'émulsion à 80°C.

Il a une largeur de 40 cm. La pompe est réglée de façon à alimenter le bac à la vitesse de 12 l/minute. Le tapis se déplace à la vitesse linéaire de 12 m/minute.

Avec cette installation, une barde de 2 mm d'épaisseur est obtenue. Elle se présente sous la forme d'un ruban de 40 cm de largeur.

A l'extrémité du tapis, long de 8 mètres, la barde est découpée en bandes de 40 cm sur 20 cm. Les bandes sont regroupées par paquets, en disposant entre elles une feuille de papier buvard alimentaire, dans des sachets en plastique. Les sachets

0228319

sont scellés par thermo-formage et peuvent être ainsi conservés pendant un mois à + 10°C.

Les bandes ainsi obtenues sont souples, ont une surface regulière et présentent une bonne adhérence aux moules ou aux produits alimentaires.

REVENDICATIONS

1. Composition alimentaire pulvérulente à base de matière grasse et de gélifiants, apte à former une émulsion dans l'eau, laquelle après cuisson et refroidissement se fige en un produit ayant une texture analogue à celle de la barde de porc, caractérisée en ce qu'elle est constituée d'un mélange d'au moins une matière grasse et d'au moins trois gélifiants choisis parmi les carraghénanes, la gomme xanthane et la farine de graines de caroube.

2. Composition selon la revendication 1, caractérisée en ce que la matière grasse est une matière grasse d'origine végétale, une matière grasse d'origine animale ou leurs mélanges.

3. Composition selon l'une des revendications 1 ou 2, caractérisée en ce qu'elle contient en outre de la gélatine et éventuellement un quatrième gélifiant.

4. Composition selon l'une quelconque des revendications 1 à 3, caractérisée en ce qu'elle contient en outre un sel alimentaire et/ou des arômes et/ou des colorants alimentaires.

5. Composition selon l'une des revendications 1 ou 2, caractérisée en ce qu'elle contient, en pourcentages par rapport à son poids, environ 70 à 85 % de matière grasse végétale, 10 à 15 % de carraghénane, 4,9 à 14,5 % de farine de graines de caroube et 0,1 à 0,5 % de gomme xanthane.

6. Composition selon la revendication 5, caractérisée en ce qu'elle contient en outre, par rapport à son poids final, 1 à 15% de glucides, 1 à 5 % de protéines, 0,1 à 1 % de gomme de guar et 1 à 3 % d'un sel alimentaire.

7. Composition selon la revendication 6, caractérisée en ce qu'elle contient, en pourcentages par rapport à son poids, 77 % d'un concentré contenant, pour 100 g de son poids, 77,1 g de lipides, 15,8 g de glucides, 5,3 g de protéines, 1,5 g d'eau et 0,3 g de cendres, 12,2 % de carraghénane, 8 % de farine de graines de caroube, 0,2 % de gomme xanthane, 0,6 % de gomme de guar et 2 % de chlorure de sodium.

8. Composition selon l'une quelconque des revendications 1 à 3, caractérisée en ce qu'elle contient, en pourcentages par rapport à son poids, environ 20 à 69 % de matière grasse végétale, 30 à 75 % de gélatine, 0,4 à 3 % de carraghénane, 0,5 à 1,5 % de farine de graines de caroube et 0,1 à 0,5 % de gomme xanthane.

9. Composition selon la revendication 8, caractérisée en ce qu'elle contient en outre, par rapport à son poids final, 1 à 15 % de glucides, 1 à 5 % de protéines, 0,1 à 1 % de gomme de guar et 1 à 3 % d'un sel alimentaire.

10. Composition selon la revendication 9, caractérisée en ce qu'elle contient, en pourcentages par rapport à son poids, 50 % d'un concentré contenant, pour 100 g de son poids, 77,1 g de lipides, 15,8 g de glucides, 5,3 g de protéines, 1,5 g d'eau et 0,3 g de cendres, 45 % de gélatine de catégorie G 200 Bloom chaulée, 1,4 % de carraghénane, 1 % de farine de graines de caroube, 0,15 % de gomme xanthane, 0,45 % de gomme de guar et 2 % de chlorure de sodium.

11. Produit résultant de la cuisson d'une émulsion aqueuse contenant de 15 à 30 g pour 100 ml d'une composition selon l'une quelconque des revendications 1 à 10.

12. Produit d'enrobage obtenu par cuisson à 95°C et refroidissement à 40°C environ d'une composition alimentaire selon l'une quelconque des revendications 3 à 6, et 10, 11, ladite composition contenant de la gélatine.

13. Succédané de la barde obtenu par couchage à chaud d'un produit selon la revendication 11.

Office européen
des brevets

**RAPPORT DE RECHERCHE EUROPEENNE**

0228319
Numero de la demande

EP  86 40 2531

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | EP-A-0 011 344  (UNILEVER N.V.) <br> *     Revendications     1,2,4-7; exemples I,V * | 1-10 | A 23 D   5/00 <br> A 23 L   1/04 |
| | --- | | |
| A | GB-A-2 110 517  (GENERAL FOODS LTD) <br> * Revendication 1; exemples A,B * | 1-4 | |
| | --- | | |
| A | FR-A-2 311 500  (SOCIETE CIVILE FINANCA) <br> * Revendications 1-3,7,8; page 8, lignes 10-17; exemples 8,11 * | 1-4,8-10 | |
| | --- | | |
| A | CA-A-1 074 176  (SILVERWOOD INDUSTRIES LTD) <br> *    Revendications    1,5,6,8,10,11; exemple 1 * | 1-4 | |
| | ----- | | |

**DOMAINES TECHNIQUES RECHERCHES (Int. Cl.4)**

A 23 D
A 23 L

Le présent rapport de recherche a été établi pour toutes les revendications

| Lieu de la recherche | Date d'achèvement de la recherche | Examinateur |
|---|---|---|
| LA HAYE | 19-02-1987 | PEETERS J.C. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82